# EUROPEAN PATENT SPECIFICATION

(11) **EP 1 897 794 B1**
(45) Date of publication and mention of the grant of the patent: **10.06.2009**
(21) Application number: 07017689.6
(22) Date of filing: 10.09.2007
(51) Int. Cl.: B62K 11/04, F01N 7/08, F01N 7/18, F01N 7/14

(54) **Straddle-type vehicle**
Spreitzsitz-Fahrzeug
Véhicule du type monté à califourchon

(30) Priority: 11.09.2006 JP 2006245349
(43) Date of publication of application: 12.03.2008
(73) Proprietor: Yamaha Hatsudoki Kabushiki Kaisha, Iwata-shi, Shizuoka-ken 438-8501 (JP)
(72) Inventor: Arai, Nobuhiro, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 744 025
- JP-A- 3 237 212
- JP-A- 9 032 547
- JP-A- 2002 303 132
- US-A- 4 881 614

## Description

The present invention relates to a straddle-type vehicle, according to claim 1 and, in particular a motorcycle, comprising a straddle-type vehicle which comprises a main frame extending longitudinally of the vehicle, an engine mounted on the main frame, and having an exhaust opening disposed therein, an exhaust pipe extending forward from the exhaust opening and being curved and further extending rearward, wherein the exhaust pipe is positioned between the engine and the main frame.

Exhaust purifying devices for motorcycles in which a main catalyst is disposed in a silencer and a pre-catalyst is disposed in an exhaust pipe are known. Exhaust gas can be purified when it passes through the main catalyst and the pre-catalyst. (See Patent Document 1, for example.)

Patent Document 1 discloses an exhaust purifying device for a motorcycle including: an exhaust pipe extending forward from an exhaust opening of an engine and extending downward and further extending rearward; and a pre-catalyst disposed in the exhaust pipe. The exhaust pipe passes by one side of a cylinder body. The pre-catalyst is positioned on the one side of the cylinder body.

Patent Document 1: JP-A-2006-9648 (page 6 and FIG. 3)

The sole use of the main catalyst installed in the muffler is often insufficient for the purification of exhaust gas due to a lower temperature. This is because the main catalyst is usually far away from the exhaust opening, so that the temperature of exhaust gas will lower by the time the exhaust gas reaches the catalyst. The additional use of the pre-catalyst aims at smooth purification of exhaust gas. However, efficient purification of exhaust gas will not be achieved if the temperature of exhaust gas does not increase. Meanwhile, the pre-catalyst will typically have high interior temperatures of 800 to 900°C, for example. It is thus critical to protect rider's leg against radiation heat from a portion of the exhaust pipe where the pre-catalyst is installed.

Unfortunately, according to Patent Document 1, the pre-catalyst is arranged near the cylinder body for earlier activation of exhaust gas. As a result, the pre-catalyst will be disposed proximate to rider's leg. Thus, measures must be taken against damage due to heat. When the pre-catalyst is installed in a rear part of the exhaust pipe (a position closer to the silencer), efficient purification will not be achieved. When a heat insulating plate is provided on the outside of the exhaust pipe like described in the EP 1 744 025 A2, the insulating plate itself may become very hot, or in some cases, melt depending on the material used.

Another example of protecting the rider's leg of getting hot or even burned is known from JP-2002/303132. The motorcycle described in this document comprises an exhaust pipe which is positioned between the engine and the main frame. Although the pipe is positioned with a distance to the driver's leg, the pipe itself is still hot and can harm objects which get close to it, i.e. a trouser leg fluttering by airstream.

Therefore, it is the objective of the present invention to provide a straddle-type vehicle, in particular a motorcycle, in which a pre-catalyst is disposed in an exhaust pipe to purify exhaust gas, the pre-catalyst is installed away from rider's leg and damage due to radiation heat, from a portion of the exhaust pipe where the pre-catalyst is installed, is prevented.

This objective is solved in an inventive manner by a straddle-type vehicle according to claim 1.

Preferably, the catalyst is positioned at an inside of the main frame.

Further, preferably the engine has a crankcase on one side in a vehicle width direction, and the catalyst is positioned above the crankcase.

Still further, preferably the catalyst is positioned adjacent to the crankcase.

Yet further, preferably the catalyst is positioned rearwardly of a lateral side end of the engine and by the inside of the main frame.

According to a further preferred embodiment, the straddle-type vehicle further comprises an oxygen concentration sensor installed in the exhaust pipe, wherein the catalyst is installed forwardly of the oxygen concentration sensor.

Furthermore, the exhaust pipe may be positioned by the side of the engine so as to extend rearwardly and inwardly.

Beneficially, the exhaust pipe passing around the engine is located such that its center axis is inclined to the inside at an angle relative to the traveling direction of the vehicle.

Yet further, beneficially a heat shield plate is disposed on the outside in a vehicle width direction of a portion of the exhaust pipe where the catalyst is installed.

Therein, the heat shield plate may shield the outer pipe.

Likewise, the heat shield plate may be attached to the main frame.

According to a further preferred embodiment, the straddle-type vehicle further comprises a silencer connected to a rear end of the exhaust pipe, wherein the catalyst includes a pre-catalyst for raising the temperature of exhaust gas; and a main catalyst positioned downstream of the pre-catalyst for purifying the exhaust gas, and wherein the pre-catalyst is disposed in the exhaust pipe, and the main catalyst is disposed in the silencer.

In the following, the present invention is explained in greater detail with respect to several embodiments thereof in conjunction with the accompanying drawings, wherein:
- FIG. 1: is a schematic side view illustrating the general structure of a motorcycle to which the present teaching is applied,
- FIG. 2: is an enlarged view of a portion of FIG. 1,
- FIG. 3: is a plan view of a portion including an engine and an exhaust pipe of the motorcycle shown in FIG. 1, and
- FIG. 4: is a cross sectional view taken along the line IV-IV of FIG. 3.

### Description of Reference Numerals:

1: motorcycle
12: main frame
14: head pipe
16: front fork
18: front wheel
20: engine
22: silencer
24: exhaust pipe
25: outer pipe
26: fuel tank
28: seat
30: rear cushion
31: seat rail
32: pivot shaft
33: backstay
34: rear arm
38: crankcase
40: cylinder body
42: exhaust opening
48: handlebar
58: main catalyst
60: pre-catalyst
62: heat shield plate
100: rider's leg
124: first exhaust pipe
224: second exhaust pipe
324: third exhaust pipe

An embodiment embodying the present teaching will be described below with reference to the drawings.

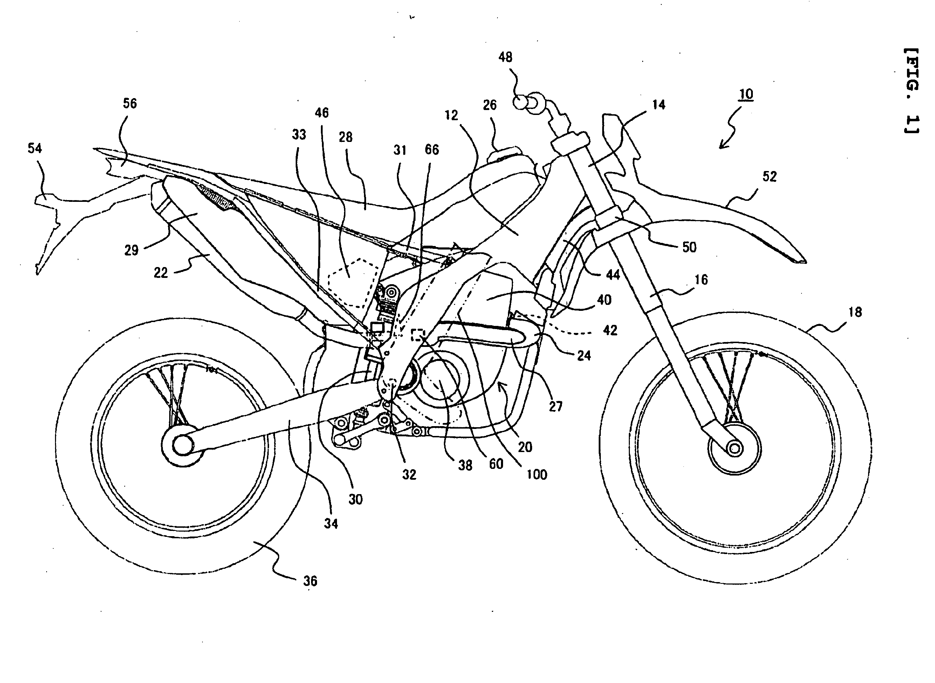

FIG. 1 is a side view illustrating the general structure of a motorcycle in accordance with an embodiment.

A motorcycle 10 includes a head pipe 14 below handlebars 48, and a pair of left and right main frames 12 extending from the head pipe 14 longitudinally of the vehicle. To the head pipe 14, front forks 16 are attached in a manner to steer to the left and right. A front wheel 18 is attached to lower parts of the front forks 16. To the main frame 12, an engine 20 is mounted. The engine 20 has an exhaust pipe 24 attached thereto through which exhaust gas can flow into a silencer 22.

From a middle portion of each main frame 12, a seat rail 31 and a backstay 33 extend upward and rearward. The middle portion of the main frame 12, the seat rail 31, and the backstay 33 are coupled together to form a generally triangular framework. From a lower part of the main frame 12, a rear arm 34 extends. The rear arm 34 is attached for up-and-down pivotal movement about a pivot shaft 32 via a rear cushion 30. A rear wheel 36 is attached to a rear part of the rear arm 34.

On a generally central upper portion of the vehicle, a fuel tank 26 and a seat 28 are attached in a manner to be supported with the main frames 12 and the seat rails 31.

The engine 20 includes a crankcase 38 and a cylinder body 40. The engine 20 is secured to the main frames 12 with securing means such as bolts. The engine 20 is a four-stroke engine. The engine 20 has an exhaust opening 42 in a front part of the engine 20. The exhaust pipe 24 is attached to the exhaust opening 42.

The exhaust pipe 24 extends forward from the exhaust opening 42 and is curved and further extends rearward. As seen from above, the exhaust pipe 24 is positioned between the engine 20 and the main frame 12. The silencer 22 is connected to an outlet of the exhaust pipe 24 in front of the rear wheel 36 and below the seat 28. The exhaust pipe 24 and the silencer 22 respectively have protectors 27, 29 attached thereto which prevent dissipation of heat from exhaust gas. Above the engine 20, there is disposed a radiator 44. An air cleaner 46 is disposed behind the engine 20 and below the seat 28.

The exhaust pipe 24 is attached to the exhaust opening 42 of the engine 20. The silencer 22 is secured to the backstay 33 with a bolt. In a front portion of the vehicle, a front turn signal 50 is provided below the handlebars 48. A front fender 52 is attached to the insides of the left and right front forks 16. In an upper rear portion of the vehicle, there are provided a rear fender 54 and a rear turn signal 56.

Around an output shaft of the engine 20 and the rear wheel 36, a chain (not shown) is wound to transmit power.

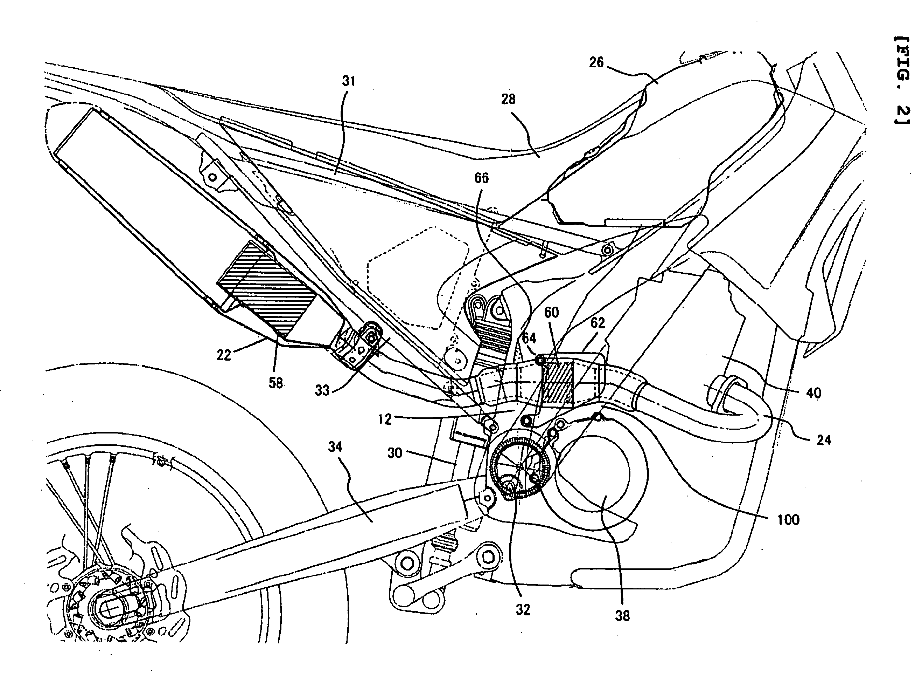

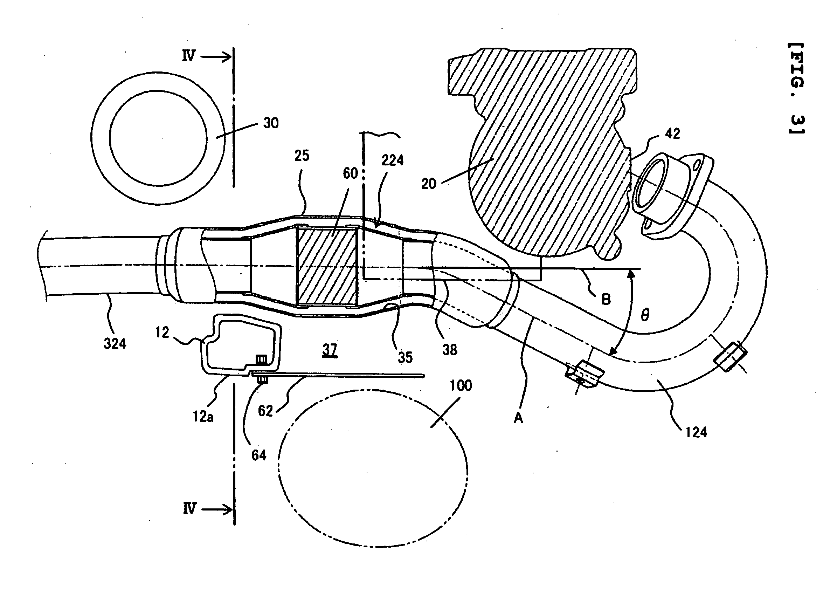

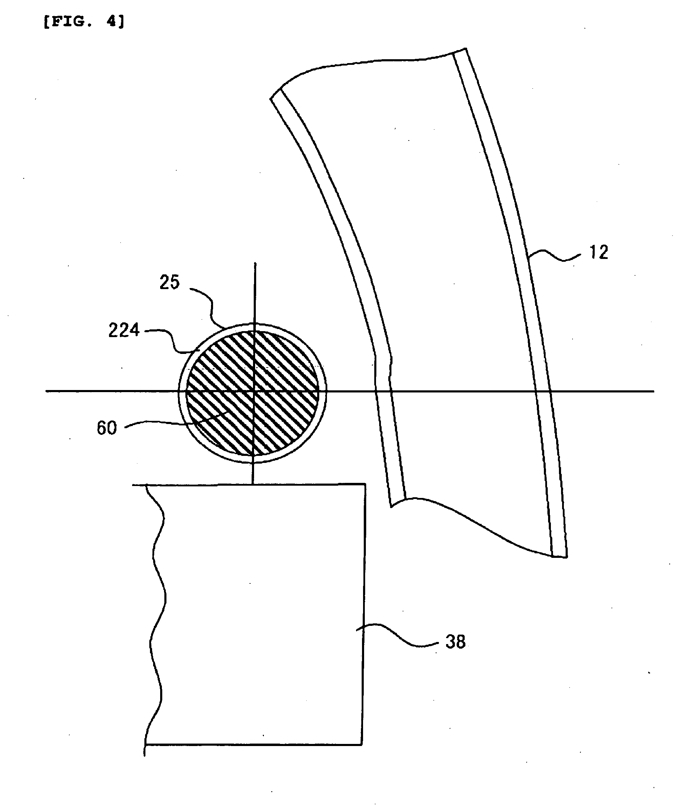

FIG. 2 is an enlarged side view of a portion including the engine 20 and the exhaust pipe 24 of the motorcycle 10. FIG. 3 is a schematic plan view corresponding to FIG. 2, and FIG. 4 is a cross sectional view taken along the line IV-IV in FIG. 3.

The exhaust pipe 24 includes a first exhaust pipe 124, a second exhaust pipe 224, and a third exhaust pipe 324 connected together. Through the first exhaust pipe 124 to third exhaust pipe 324, exhaust gas will be delivered from the engine 20 to the silencer 22. To facilitate the gas delivery through a predetermined route, these exhaust pipes each have a certain radius of curvature.

The first exhaust pipe 124 is connected to the exhaust opening 42 of the engine at the inlet of the exhaust pipe 124 and extends forward, and is curved and further extends rearward. The second exhaust pipe 224 is connected to an outlet of the first exhaust pipe 124 and extends rearward. A middle portion of the second exhaust pipe 224 has a larger diameter. The third exhaust pipe 324 is connected to an outlet of the second exhaust pipe 224 and extends rearward. An outlet of the third exhaust pipe 324 is connected to an inlet of the silencer 22.

It is understood that the first exhaust pipe 124, second exhaust pipe 224, and third exhaust pipe 324 can be formed together into a single piece.

The motorcycle in accordance with this embodiment further includes a silencer 22 connected to a rear end of the third exhaust pipe 324. In the silencer 22, a main catalyst 58 is disposed for purifying exhaust gas. In the second exhaust pipe 224, a pre-catalyst 60 is disposed for raising the temperature of exhaust gas. The pre-catalyst 60 is positioned forwardly of the main catalyst 58. The main catalyst 58 is a known device for purifying exhaust gas. Since the sole use of the main catalyst 58 results in insufficient purification of exhaust gas, the pre-catalyst 60 is provided additionally.

Description will now be given to the pre-catalyst 60.

The pre-catalyst 60 uses a catalyst reducing device including platinum, rhodium or the like to deoxidize or oxidize toxic substances contained in exhaust gas. The pre-catalyst 60 exhibits low reducing ability at ambient temperatures. Specifically, immediately after the start of the engine 20, it exhibits substantially no reducing ability. Hence, the pre-catalyst 60 is positioned closer to the exhaust opening 42 of the engine 20 to thereby raise the temperature of exhaust gas.

In this embodiment, the exhaust pipe 24 is positioned by the side of the engine 20 so as to extend rearward and inward, and passes between the engine 20 and the main frame 12. The pre-catalyst 60 is disposed in a portion of the exhaust pipe 24 on the vehicle side of the main frame 12.

As shown in FIGs. 2 and 3, the exhaust pipe 24 extends forward from the exhaust opening 42 of the engine 20 and is curved and further extends rearward. The exhaust pipe 24 passes above the crankcase 38 of the engine 20 and by the inside of the main frame 12. The exhaust pipe 24 further passes between the inside of the main frame 12 and the rear cushion 30 and extends rearward.

The exhaust pipe 24 is positioned by the side of the engine 20 and extends from the front side of the vehicle toward the rear to be inclined to the inside. More specifically, the exhaust pipe 24 passing around the engine 20 is located such that its center axis "A" is inclined to the inside at an angle of θ relative to the direction of axis "B" in which the vehicle travels (see FIG. 3). This aims at separating the exhaust pipe 24 at high temperatures as far away from rider's leg (calf) 100 as possible.

The pre-catalyst 60 is disposed adjacent to the crankcase 38 and in a portion of the exhaust pipe 24 above and closely behind the crankcase 38 (see FIG. 4). As a result, the pre-catalyst 60 will be positioned rearwardly of a lateral side end of the engine 20 and by the inside of the main frame 12.

In this embodiment, since the pre-catalyst 60 is positioned proximate to the exhaust opening 42 in the exhaust pipe 24, the temperature of the pre-catalyst 60 will rise quickly. This achieves efficient purification of exhaust gas. In addition, the pre-catalyst 60 is positioned inside of an outside end of the main frame 12 (see FIG. 3) to be apart from the rider's leg 100. Thus, damage due to heat from the pre-catalyst 60 at high temperatures can be prevented.

In this embodiment, a portion of the exhaust pipe where the pre-catalyst 60 is disposed has a double-pipe structure.

As shown in FIG. 3, the second exhaust pipe 224 has the pre-catalyst 60 disposed therein. An outer pipe 25 is attached so as to cover the periphery of the second exhaust pipe 224. The outer pipe 25 is disposed around the second exhaust pipe 224 to define a heat insulating space 35 therebetween. A front end and a rear end of the outer pipe 25 are in sealing contact with the periphery of the second exhaust pipe 224. Thus, the heat insulating space 35 is an enclosed space.

Due to this outer pipe 25, the air in the enclosed space will exert a heat insulation effect to insulate radiation heat from the pre-catalyst 60 at high temperatures (e.g., 900°C). The pre-catalyst 60 at high temperatures may cause a change in color or rust on the second exhaust pipe 224. The outer pipe 25 also serves to hide the second exhaust pipe 224 subjected to such change in color or the like.

In this embodiment, a heat shield plate 62 is attached so as to shield the outer pipe 25 described above. Specifically, the heat shield plate 62 is composed of synthetic resin, and is secured to the main frame 12 with a bolt 64. The heat shield plate 62 can thus be easily attached. The heat shield plate 62 can be composed of any material other than synthetic resin, e.g., metal sheet.

The heat shield plate 62 is disposed on the outside in the vehicle width direction of a portion of the exhaust pipe 24 where the pre-catalyst 60 is installed. A heat insulating space 37 is thereby defined between the exhaust pipe 24 and the heat shield plate 62. Damage due to heat from the exhaust pipe 24 can thus be prevented.

The periphery of the pre-catalyst 60 is covered by the outer pipe 25, which is in turn shielded by the heat shield plate 62, as described above. Therefore, damage due to heat from the pre-catalyst 60 can be prevented.

In this embodiment, an oxygen concentration sensor 66 is installed in a portion of the exhaust pipe 24 passing through the inside of the main frame 12 (see FIG. 1). The pre-catalyst 60 is installed forwardly of the oxygen concentration sensor 66 in the exhaust pipe 24.

The oxygen concentration sensor 66 detects the concentration of oxygen in exhaust gas. The detection value from the sensor 66 is used to control a mixture ratio.

As described above, in this embodiment, the exhaust pipe 24 is positioned between the engine 20 and the main frame 12, as seen from above. The catalyst (pre-catalyst 60) is positioned inside of the outside end of the main frame 12. Accordingly, the catalyst (pre-catalyst 60) is apart from rider's leg, so that damage due to heat from the exhaust pipe 24 can be prevented.

The engine 20 has the crankcase 38 on a side in the vehicle width direction. Since the catalyst (pre-catalyst 60) is positioned above the crankcase 38, the projection of the catalyst (pre-catalyst 60) beyond an outside end of the crankcase 38 can be reduced. Thus, damage due to heat from the catalyst (pre-catalyst 60) can be prevented, and efficient purification of exhaust gas can be achieved.

The catalyst (pre-catalyst 60) is positioned adjacent to the crankcase 38, thereby disposing the catalyst (pre-catalyst 60) closer to the exhaust opening 42. The temperature of the catalyst (pre-catalyst 60) will thus rise quickly.

The motorcycle in accordance with this embodiment includes the oxygen concentration sensor 66 installed in the exhaust pipe 24. The catalyst (pre-catalyst 60) is installed forwardly of the oxygen concentration sensor 66. Thus, the catalyst (pre-catalyst 60) can be disposed closer to the exhaust opening 42. Thus, the temperature of the catalyst (pre-catalyst 60) will rise quickly, which achieves efficient purification of exhaust gas.

The exhaust pipe 24 is positioned by the side of the engine 20 so as to extend rearward and inward. The catalyst (pre-catalyst 60) is thereby apart from rider's leg, so that damage due to heat from the exhaust pipe 24 can be prevented.

The motorcycle in accordance with this embodiment includes the outer pipe 25 covering the periphery of a portion of the exhaust pipe 24 where the catalyst (pre-catalyst 60) is installed. As a result, the heat insulating space 35 is defined between the exhaust pipe 24 and the outer pipe 25. Damage due to heat from the exhaust pipe 24 can thus be prevented.

The heat shield plate 62 is arranged on the outside in the vehicle width direction of a portion of the exhaust pipe 24 where the catalyst (pre-catalyst 60) is installed. As a result, the heat insulating space 37 is defined between the exhaust pipe 24 and the heat shield plate 62. Damage due to heat from the exhaust pipe 24 can thus be prevented.

The motorcycle in accordance with this embodiment further includes the outer pipe 25 covering the periphery of a portion of the exhaust pipe 24 where the catalyst (pre-catalyst 60) is installed. The outer pipe 25 is in turn shielded by the heat shield plate 62. Thus, damage due to heat from the exhaust pipe 24 can be prevented.

The heat shield plate 62 is attached to the main frame 12. This facilitates the attachment of the heat shield plate 62.

The catalyst includes the pre-catalyst 60 for raising the temperature of exhaust gas, and the main catalyst 58 positioned downstream of the pre-catalyst 60 for purifying the exhaust gas. The pre-catalyst 60 is disposed in the exhaust pipe 24, and the main catalyst 58 is disposed in the silencer 22. Thus, the temperature of exhaust gas can be raised through the pre-catalyst 60, and purification of exhaust gas can be credibly achieved through the main catalyst 58.

The description above discloses (amongst others), in order to achieve the foregoing object, a first embodiment providing a motorcycle including: a main frame extending longitudinally of the vehicle; an engine mounted to the main frame and having an exhaust opening disposed therein; an exhaust pipe extending forward from the exhaust opening and being curved and further extending rearward; and a catalyst disposed in the exhaust pipe, in which the exhaust pipe is positioned between the engine and the main frame, as seen from above, and the catalyst is positioned inside of an outside end of the main frame.

Further, according to a second embodiment, the engine has a crankcase on one side in a vehicle width direction, and the catalyst is positioned above the crankcase.

Further, according to a third embodiment, the catalyst is positioned adjacent to the crankcase.

Further, according to a fourth embodiment, an oxygen concentration sensor is provided which is installed in the exhaust pipe, and in which the catalyst is installed forwardly of the oxygen concentration sensor.

Further, according to a fifth embodiment, the exhaust pipe is positioned by the side of the engine so as to extend rearward and inward.

Further, according to a sixth embodiment, an outer pipe is provided which covers the periphery of a portion of the exhaust pipe where the catalyst is installed.

Further, according to a seventh embodiment, a heat shield plate is disposed on the outside in a vehicle width direction of a portion of the exhaust pipe where the catalyst is installed.

Further, according to an eighth embodiment, an outer pipe is provided which covers the periphery of the portion of the exhaust pipe where the catalyst is installed, in which the heat shield plate shields the outer pipe.

Further, according to a ninth embodiment, the heat shield plate is attached to the main frame.

Further, according to a tenth embodiment, a silencer is provided which is connected to a rear end of the exhaust pipe, wherein the catalyst includes: a pre-catalyst for raising the temperature of exhaust gas; and a main catalyst positioned downstream of the pre-catalyst for purifying the exhaust gas, in which the pre-catalyst is disposed in the exhaust pipe, and the main catalyst is disposed in the silencer.

According to the present effect of the present teaching, a pre-catalyst is disposed in an exhaust pipe to purify exhaust gas. Further, the pre-catalyst is apart from rider's leg, so that damage due to heat from the exhaust pipe can be prevented.

The description above further discloses, according to a preferred first aspect, a motorcycle comprising: a main frame extending longitudinally of the vehicle; an engine mounted on the main frame and having an exhaust opening disposed therein; an exhaust pipe extending forward from the exhaust opening and being curved and further extending rearward; and a catalyst disposed in the exhaust pipe, wherein the exhaust pipe is positioned between the engine and the main frame, as seen from above, and the catalyst is positioned inside of an outside end of the main frame.

Further, according to a preferred second aspect, the engine has a crankcase on one side in a vehicle width direction, and the catalyst is positioned above the crankcase.

Further, according to a preferred third aspect, the catalyst is positioned adjacent to the crankcase.

Further, according to a preferred fourth aspect, the motorcycle may further comprise an oxygen concentration sensor installed in the exhaust pipe, wherein the catalyst is installed forwardly of the oxygen concentration sensor.

Further, according to a preferred fifth aspect, the exhaust pipe may be positioned by the side of the engine so as to extend rearward and inward.

Further, according to a preferred sixth aspect, the motorcycle may further comprise an outer pipe covering the periphery of a portion of the exhaust pipe where the catalyst is installed.

Further, according to a preferred seventh aspect, a heat shield plate is disposed on the outside in a vehicle width direction of a portion of the exhaust pipe where the catalyst is installed.

Further, according to a preferred eighth aspect, the motorcycle may further comprise an outer pipe covering the periphery of the portion of the exhaust pipe where the catalyst is installed, wherein the heat shield plate shields the outer pipe.

Further, according to a preferred ninth aspect, the heat shield plate is attached to the main frame.

Further, according to a preferred tenth aspect, the motorcycle further comprises a silencer connected to a rear end of the exhaust pipe, wherein the catalyst includes: a pre-catalyst for raising the temperature of exhaust gas; and a main catalyst positioned downstream of the pre-catalyst for purifying the exhaust gas, wherein the pre-catalyst is disposed in the exhaust pipe, and the main catalyst is disposed in the silencer.

Further, according to a particularly preferred embodiment, there is disclosed a motorcycle 10 which includes a main frame 12 extending longitudinally of the vehicle; an engine 20 mounted on the main frame 12 and having an exhaust opening 42 disposed therein; an exhaust pipe 24 extending forward from the exhaust opening 42 and being curved and further extending rearward; and a pre-catalyst 60 disposed in the exhaust pipe 24. The exhaust pipe 24 is positioned between the engine 20 and the main frame 12, as seen from above. The pre-catalyst 60 is positioned inside of an outside end of the main frame 12.

## Claims

1. Straddle-type vehicle which comprises a main frame (12) extending longitudinally of the vehicle, an engine (20) mounted on the main frame (12), and having an exhaust opening (42) disposed therein, an exhaust pipe (24) extending forward from the exhaust opening (42) and being curved and further extending rearward, wherein the exhaust pipe is positioned between the engine (20) and the main frame (12) as seen from above, **characterized through** a catalyst (60) being disposed in the exhaust pipe (24) and an outer pipe (25) covering the periphery of a portion of the exhaust pipe (24) where the catalyst (60) is installed.

2. Straddle-type vehicle according to claim 1, wherein the catalyst (60) is positioned at an inside of the main frame.

3. Straddle-type vehicle according to claim 1 or 2, wherein the engine (20) has a crankcase (38) on one side in a vehicle width direction, and the catalyst (60) is positioned above the crankcase (38).

4. Straddle-type vehicle according to claim 3, wherein the catalyst (60) is positioned adjacent to the crankcase (38).

5. Straddle-type vehicle according to claim 3 or 4, wherein the catalyst (60) is positioned rearwardly of a lateral side end of the engine (20) and by the inside of the main frame (12).

6. Straddle-type vehicle according to one of the claims 1 to 5, further comprising an oxygen concentration sensor (66) installed in the exhaust pipe (24); wherein the catalyst (60) is installed forwardly of the oxygen concentration sensor (66).

7. Straddle-type vehicle according to one of the claims 1 to 6, wherein the exhaust pipe (24) is positioned by the side of the engine (20) so as to extend rearwardly and inwardly.

8. Straddle-type vehicle according to claim 7, wherein the exhaust pipe (24) passing around the engine (20) is located such that its center axis (A) is inclined to the inside at an angle (θ) relative to the traveling direction (B) of the vehicle.

9. Straddle-type vehicle according to one of the claims 1 to 8, wherein a heat shield plate (62) is disposed on the outside in a vehicle width direction of a portion of the exhaust pipe (24) where the catalyst (60) is installed.

10. Straddle-type vehicle according to claim 9, wherein the heat shield plate (62) shields the outer pipe (25).

11. Straddle-type vehicle according to claim 9 or 10, wherein the heat shield plate (62) is attached to the main frame (12).

12. Straddle-type vehicle according to one of the claims 1 to 11, further comprising a silencer (22) connected to a rear end of the exhaust pipe (24), wherein the catalyst includes a pre-catalyst (60) for raising the temperature of exhaust gas; and a main catalyst positioned downstream of the pre-catalyst (60) for purifying the exhaust gas, and wherein the pre-catalyst (60) is disposed in the exhaust pipe (24), and the main catalyst is disposed in the silencer (22).

## Patentansprüche

1. Fahrzeug vom Aufsitz- Typ, das aufweist einen Hauptrahmen (12), der sich in Längsrichtung des Fahrzeuges erstreckt, eine Brennkraftmaschine (20), montiert an dem Hauptrahmen (12) und mit einer in dieser angeordneten Abgasöffnung (42), ein Abgasrohr (24), das sich von der Abgasöffnung (42) nach vorn erstreckt und gekrümmt ist und sich weiter nach hinten erstreckt, wobei das Abgasrohr zwischen der Brennkraftmaschine (20) und dem Hauptrahmen (12), wenn von oben gesehen, montiert ist, **gekennzeichnet durch** einen Katalysator (60), der in dem Abgasrohr (24) angeordnet ist, und einem äußeren Rohr (25), das den Umfang eines Abschnittes des Abgasrohres (24), wo der Katalysator (60) installiert ist, abdeckt.

2. Fahrzeug vom Aufsitz- Typ nach Anspruch 1, wobei der Katalysator (60) an einer Innenseite des Hauptrahmens positioniert ist.

3. Fahrzeug vom Aufsitz- Typ nach Anspruch 1 oder 2, wobei die Brennkraftmaschine (20) ein Kurbelgehäuse (38) auf einer Seite in einer Richtung der Fahrzeugbreite hat und der Katalysator (60) oberhalb des Kurbelgehäuses (38) positioniert ist.

4. Fahrzeug vom Aufsitz- Typ nach Anspruch 3, wobei der Katalysator (60) benachbart zu dem Kurbelgehäuse (38) positioniert ist.

5. Fahrzeug vom Aufsitz- Typ nach Anspruch 3 oder 4, wobei der Katalysator (60) rückwärts eines seitlichen Seitenendes der Brennkraftmaschine (20) und durch die Innenseite des Hauptrahmens (12) positioniert ist.

6. Fahrzeug vom Aufsitz- Typ nach einem der Ansprüche 1 bis 5, außerdem aufweisend einen Sauerstoffkonzentrationssensor (66), installiert in dem Abgasrohr (24); wobei der Katalysator (60) vor dem Sauerstoffkonzentrationssensor (66) angeordnet ist.

7. Fahrzeug vom Aufsitz- Typ nach einem der Ansprüche 1 bis 6, wobei das Abgasrohr (24) durch die Seite der Brennkraftmaschine (20) positioniert ist, um sich nach hinten und einwärts zu erstrecken.

8. Fahrzeug vom Aufsitz- Typ nach Anspruch 7, wobei das Abgasrohr (24), das sich um die Brennkraftmaschine (20) herum erstreckt, derart angeordnet ist, dass seine Mittelachse (A) nach innen unter einem Winkel (θ) relativ zu der Fahrtrichtung (B) des Fahrzeuges geneigt ist.

9. Fahrzeug vom Aufsitz- Typ nach einem der Ansprüche 1 bis 8, wobei eine Hitzeschildplatte (62) an der Außenseite in einer Richtung der Fahrzeugbreite eines Abschnittes des Abgasrohres (24), wo der Katalysator (60) installiert ist, angeordnet ist.

10. Fahrzeug vom Aufsitz- Typ nach Anspruch 9, wobei die Hitzeschildplatte (62) das äußere Rohr (25) abschirmt.

11. Fahrzeug vom Aufsitz- Typ nach Anspruch 9 oder 10, wobei die Hitzeschildplatte (62) mit dem Hauptrahmen (12) verbunden ist.

12. Fahrzeug vom Aufsitz- Typ nach einem der Ansprüche 1 bis 11, außerdem aufweisend einen Schalldämpfer (22), verbunden mit einem hinteren Ende des Abgasrohres (24), wobei der Katalysator einen Vor- Katalysator (60) zum Erhöhen einer Temperatur des Abgases enthält; und einen Haupt- Katalysator, positioniert stromab des Vor- Katalysators (60), zum Reinigen des Abgases, und wobei der Vor- Katalysator (60) in dem Abgasrohr (24) angeordnet ist und der Haupt- Katalysator in dem Schalldämpfer (22) angeordnet ist.

## Revendications

1. Véhicule du type monté à califourchon, comprenant un cadre principal (12) s'étendant dans le sens longitudinal du véhicule, un moteur (20) monté sur le cadre principal (12) et ayant une ouverture d'échappement (42) disposée dans celui-ci, un tuyau d'échappement (24) s'étendant vers l'avant à partir de l'ouverture d'échappement (42) et étant courbé pour s'étendre ensuite vers l'arrière, dans lequel le tuyau d'échappement est positionné entre le moteur (20) et le cadre principal (12) vus du dessus, **caractérisé en ce qu'**un catalyseur (60) est disposé dans le tuyau d'échappement (24) et **en ce qu'**un tuyau externe (25) recouvre la périphérie d'une partie du tuyau d'échappement (24) où est installé le catalyseur (60).

2. Véhicule du type monté à califourchon selon la revendication 1, dans lequel le catalyseur (60) est positionné dans un intérieur du cadre principal.

3. Véhicule du type monté à califourchon selon la revendication 1 ou 2, dans lequel le moteur (20) a un carter de moteur (38) sur un côté dans le sens de la largeur du véhicule, et le catalyseur (60) est positionné au-dessus du carter de moteur (38).

4. Véhicule du type monté à califourchon selon la revendication 3, dans lequel le catalyseur (60) est positionné de manière adjacente au carter de moteur (38).

5. Véhicule du type monté à califourchon selon la revendication 3 ou 4, dans lequel le catalyseur (60) est positionné vers l'arrière d'un côté latéral du moteur (20) et à l'intérieur du cadre principal (12).

6. Véhicule du type monté à califourchon selon l'une quelconque des revendications 1 à 5, comprenant en outre un capteur de concentration d'oxygène (66) installé dans le tuyau d'échappement (24) ; dans lequel le catalyseur (60) est installé vers l'avant du capteur de concentration d'oxygène (66).

7. Véhicule du type monté à califourchon selon l'une quelconque des revendications 1 à 6, dans lequel le tuyau d'échappement (24) est positionné sur le côté du moteur (20) de manière à s'étendre vers l'arrière et vers l'intérieur.

8. Véhicule du type monté à califourchon selon la revendication 7, dans lequel le tuyau d'échappement (24) passant autour du moteur (20) est positionné de telle sorte que son axe central (A) est incliné vers l'intérieur à angle (θ) par rapport au sens de déplacement (B) du véhicule.

9. Véhicule du type monté à califourchon selon l'une quelconque des revendications 1 à 8, dans lequel une plaque formant écran thermique (62) est disposée sur l'extérieur, dans un sens de la largeur du véhicule, d'une partie du tuyau d'échappement (24) où est installé le catalyseur (60).

10. Véhicule du type monté à califourchon selon la revendication 9, dans lequel la plaque formant écran thermique (62) protège le tuyau externe (25).

11. Véhicule du type monté à califourchon selon la revendication 9 ou 10, dans lequel la plaque formant écran thermique (62) est fixée au cadre principal (12).

12. Véhicule du type monté à califourchon selon l'une quelconque des revendications 1 à 11, comprenant en outre un silencieux (22) raccordé à une extrémité arrière du tuyau d'échappement (24), dans lequel le catalyseur comprend un pré-catalyseur (60) pour accroître la température des gaz d'échappement ; et un catalyseur principal, positionné en aval du pré-catalyseur (60) pour purifier les gaz d'échappement, et dans lequel le pré-catalyseur (60) est disposé dans le tuyau d'échappement (24) et le catalyseur principal est disposé dans le silencieux (22).
